(19) Europäisches Patentamt
European Patent Office
Office européen des brevets

(11) Publication number: **0 669 669 A1**

(12) **EUROPEAN PATENT APPLICATION**

(21) Application number: **95101679.9**

(22) Date of filing: **08.02.95**

(51) Int. Cl.6: **H01M 8/18**, H01M 14/00, H01M 10/34

(30) Priority: **10.02.94 JP 36320/94**

(43) Date of publication of application:
**30.08.95 Bulletin 95/35**

(84) Designated Contracting States:
**DE GB**

(71) Applicant: **MICRO COLLOID CO., LTD.**
**Mukogawara Danchi 3-407,**
**30-1, Minamidaira 5-chome**
**Hino-City,**
**Tokyo (JP)**

(72) Inventor: **Sudow, Kazuo**
**Mukogawara Danchi 3-407,**
**30-1, Minamidaira 5-chome**
**Hino-city,**
**Tokyo (JP)**

(74) Representative: **Wilcken, Thomas, Dipl.-Ing.**
**Patentanwälte**
**Wilcken & Vollmann**
**Musterbahn 1**
**D-23552 Lübeck (DE)**

(54) **Spillover type batteries.**

(57) Disclosed is a spillover type battery which is maintenance free, compact, light and non-pollutive and which can be mass-produced at a low cost. The spillover type battery comprises a generator element 11 consisting of a catalyst layer 7 formed by fixing a platinum group colloid 3 on a metal plate 1, a powdery activated carbon 9 applied on the catalyst layer 7, and another metal plate 15 clad on the activated carbon 9; a closed vessel 19 in which the generator element 11 is placed; a hydrogen gas 21 contained in the closed vessel 19; and a wiring 23 for extracting a current connected to the metal plates 1,15.

FIG.4

FIG.5

This invention relates to a spillover type battery which can be utilized, for example, in captive power generators and electric vehicles. More particularly, it relates to a spillover type battery which employs a platinum group colloid so as to utilize its high activity and the spillover phenomenon to be induced thereby, characterized in that the battery is provided with stable power generating capability.

As captive power generators, solar systems such as solar batteries and solar thermal electric conversion are generally known. However, these systems are big, heavy and expensive, so that they have been used in limited households and so on, disadvantageously. Besides, since these solar systems are very susceptible to the weather and season and degrade heavily, they need frequent maintenance so as to secure stable voltage thereby, disadvantageously.

While the automobiles today secure power utilizing internal combustion engines, i.e. by means of petroleum burning energy, the oil resource is not inexhaustible. Further, the oil energy is causative of public nuisances in that it notably affects the environment, pollutes the atmosphere and gives very loud noises. On the other hand, the internal combustion engine itself and the system surrounding it (main body of the motorcar) are very heavy and the total weight amounts to as much as 1,000 to 2,000 kg (1 to 2 tons), so that the energy loss of the system itself is tremendous.

Meanwhile, referring to the utilization of platinum group metals, they have conventionally been used, for example, as electrodes and collectors. While nickel is used in hydrogen batteries, the hydrogen batteries do not have power generating actions but are merely storage batteries.

Under such circumstances, it is an objective of the invention to provide a battery which is maintenance free, compact, light and free from the public nuisances as described above and which can be mass-produced at a low cost.

In order to attain the intended objects described above, this invention provides a spillover battery comprising a generator element consisting of a catalyst layer formed by fixing a platinum group colloid on a metal plate; a powdery activated carbon applied on the catalyst layer; and another metal plate clad on the activated carbon; a closed vessel in which the generator element is placed; a hydrogen gas contained in the closed vessel; and a wiring for extracting a current connected to these metal plates.

In this battery, the platinum group colloid can be platinum. Alternatively, the platinum group colloid can be nickel. Otherwise, the platinum group colloid can be palladium. The catalyst layer can be of a thin film. Further, the generator element can be of single layer structure or of multi-layer structure. Moreover, the platinum group colloid can be baked onto a metal plate. The activated carbon can be in intimate contact with the catalyst layer.

Hydrogen gas is attracted onto the surface of the catalyst layer of a platinum group colloid, and the hydrogen gas adsorbed onto this surface is atomized to be electrified by the static electricity in air etc. The hydrogen atoms are then attracted by the activated carbon because of the spillover phenomenon. The migration of the hydrogen atoms from the catalyst layer of the platinum group colloid to the activated carbon constitutes the principle of power generation. Surplus electrons (static electricity and the like) carried by the hydrogen atoms are extracted by laying a wiring across the activated carbon and the platinum group colloid catalyst layer. The hydrogen atoms on the surface of the activated carbon are bound to each other to resume a form of $H_2$ gas which is attracted again onto the surface of the platinum group colloid catalyst layer, repeating the above-described cycle.

To describe more specifically, since the surface of the generator element consists of the platinum group colloid catalyst layer and the activated carbon, the hydrogen gas (hydrogen molecules) in the closed vessel repeats as described below.

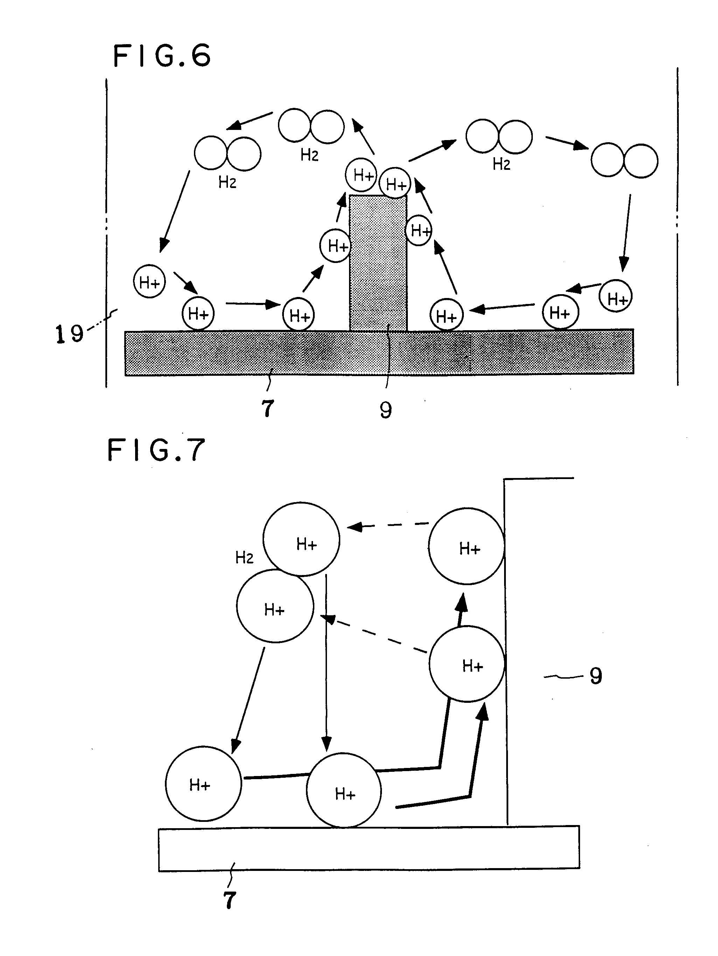

Namely, since the platinum group colloid has an action of adsorbing gaseous molecules, the hydrogen molecules are adsorbed onto the catalyst layer, and they are atomized on the catalyst layer because of its strong power of dissociating hydrogen molecules (catalytic action of the platinum group colloid). While the surface of the catalyst layer is soon saturated with the hydrogen atoms thus gathered successively thereon, the hydrogen atoms on the catalyst layer migrate across the surface of the catalyst layer onto the activated carbon surface (spillover phenomenon) and are retained there, because the activated carbon accepts hydrogen atoms. The surface of the activated carbon is shortly saturated with the hydrogen atoms migrating successively thereto, and the superabundant hydrogen atoms accumulated on the activated carbon surface attract each other to assume a form of hydrogen molecule. Since the activated carbon has substantially no capability of dissociating hydrogen molecules, the hydrogen molecules formed thereon migrate again through the closed vessel to be adsorbed onto the adjacent catalyst layer, thus repeating the above-described cycle (Fig. 7).

The hydrogen atoms migrating from the catalyst layer onto the activated carbon due to the spillover phenomenon are attracting free electrons in air or in the platinum group colloid, so that the free electrons are also carried onto the activated carbon as the hydrogen atoms migrate thereto. Then, these free electrons are extracted through an electrode attached to the activated carbon (Fig. 6).

This is the principle of the power generating action of the spillover type battery according to this invention. In other words, the migration of the hydrogen atoms generated under the catalytic activity of the platinum group colloid is oriented under control, and the free electrons which are carried as the hydrogen atoms migrate are extracted.

The features of this invention that are believed to be novel are set forth with particularity in the appended claims. The invention, together with the objects and advantages thereof, may best be understood by reference to the following description of the preferred embodiments taken in conjunction with the accompanying drawings in which:

Fig. 1 is a diagram showing one of the steps in the process for preparing the spillover type battery according to this invention;

Fig. 2 is a diagram showing another step in the process for preparing the spillover type battery according to this invention;

Fig. 3 is a diagram showing another step in the process for preparing the spillover type battery according to this invention;

Fig. 4 is a diagram showing another step in the process for preparing the spillover type battery according to this invention;

Fig. 5 is a diagram showing another step in the process for preparing the spillover type battery according to this invention;

Fig. 6 is a diagram illustrating the power generation cycle according to this invention; and

Fig. 7 is a chart illustrating the spillover phenomenon.

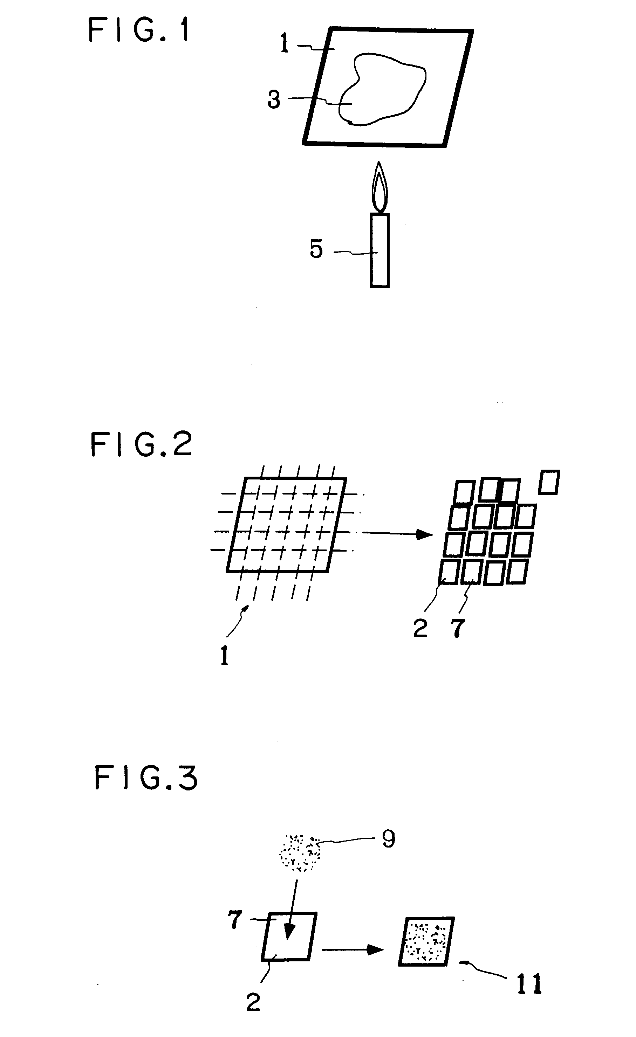

The spillover type battery according to this invention will be described in detail based on the illustrated embodiment. Figs. 1 to 5 exemplify a process for preparing the spillover type battery according to this invention. First, a platinum colloid 3 is dropped over a stainless steel plate 1 employed as the metal plate and burned to be fixed thereon with the aid of the heat of a burner 5. Thus, a catalyst layer 7 is formed. Next, after the thus treated stainless steel plate 1 is cut into pieces having an appropriate size (Fig. 2), an activated carbon powder 9 is applied on the catalyst layer 7 formed on the cut piece 2 (Fig. 3). The activated carbon powder 9 is applied evenly on the catalyst layer 7. In this case, when the activated carbon powder 9 is dissolved in water, and the resulting solution is applied onto the catalyst layer 7, followed by heating so as to evaporate the water, the activated carbon powder 9 can evenly be applied onto the catalyst layer without affecting the catalytic activity thereof. Thus, a generator element 11 can be fabricated.

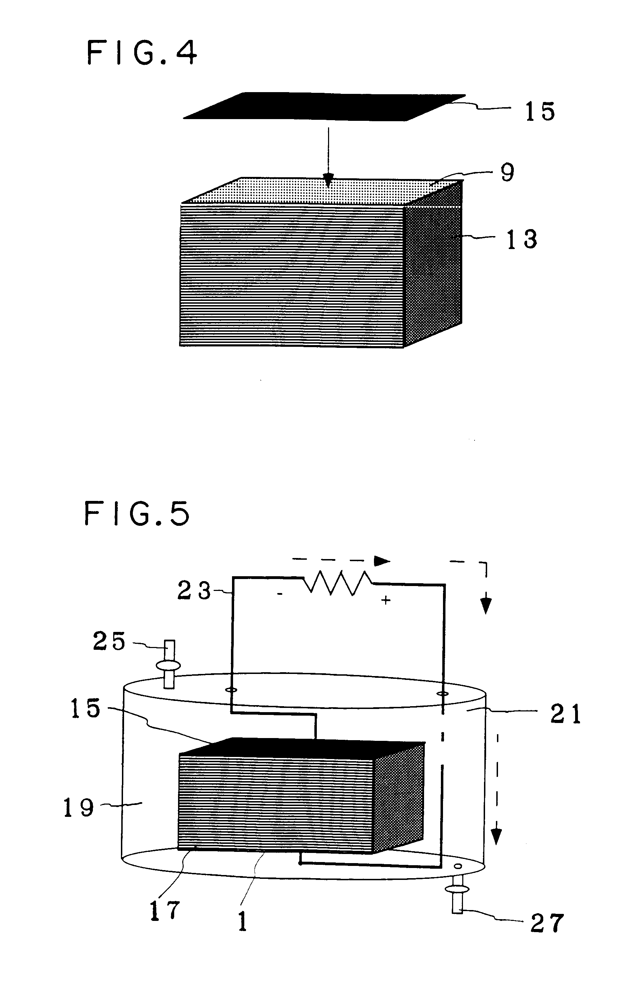

The thus obtained generator element 11 can be used singly, or a plurality of such generator elements 11 may be laminated when a great output is required. The illustrated embodiment shows the latter case. Namely, a multiplicity of such generator elements 11 are laminated with the surfaces onto which the activated carbon powder 9 is applied facing up to provide a multi-layered body 13. Another stainless steel plate 15 is clad and mounted, as another metal plate, on the uppermost surface of the multi-layered body 13 (Fig. 4). This stainless steel plate 15 serves to prevent scattering of the activated carbon powder 9 and also serves as a collector. Incidentally, when a single-layer generator element 11 is to be employed, the stainless steel plate 15 is also clad and mounted on the surface of the activated carbon powder 9. The thus formed composite generator element 17 is placed in a thick-glass closed vessel 19 which is charged with a hydrogen gas 21. The upper and lower stainless steel plates 1,15 in the composite generator element 17 serve as electrodes, and a wiring 23 for extracting a current is connected thereto. In Fig. 5, the reference number 25 shows a safety valve, and 27 a hydrogen gas inlet.

The result of power generation carried out by use of the thus prepared battery is as follows. In the case of a single-layer generator element comprising a thin film formed on a stainless steel plate 1 using 1 cc of a platinum colloid over an area of about 5 cm$^2$, and an activated carbon powder 9 sprayed on the thus formed thin film-like catalyst layer 7 over an area of 1 cm$^2$, the voltage of the generator element placed in a closed vessel containing 30 cc of hydrogen gas 21 was measured to be about 500 mV. Namely, the battery showed a power generation performance of about 500 mV/cm$^2$. Accordingly, in the composite generator element 17 having a multi-layer structure like in the above embodiment, provided that each side of the catalyst layer 7 and that of the activated carbon powder-applied piece 9 is 1 m and that 1,000 layers are laminated, the power generation performance of the generator element 17 will be:

$$0.5 \text{ (V)} \times 100 \text{ (cm)} \times 100 \text{ (cm)} \times 1,000 \text{ (layers)} = 5,000,000 \text{ (V)} = 5,000 \text{ (KV)}.$$

Since the thickness of each generator element 11 is smaller than 1 mm, the thickness of the 1,000-layer composite will be about 1 m, and thus a cubic compact generator (1 m x 1 m x 1 m) can be produced.

The action and effect of the thus constituted battery will be described with reference to Figs. 6 and 7. The hydrogen gas 21 (hydrogen molecules) in the closed vessel 19 is adsorbed onto the catalyst layer 7 of the platinum colloid 3 and atomized there under the catalytic action of the platinum colloid. The hydrogen atoms accumulated on the catalyst layer 7 migrate successively across the surface of the catalyst layer 7 onto the surface of the activated carbon powder 9 due to the spillover phenomenon. In this process, free electrons on the catalyst layer 7 also migrate onto the activated carbon powder 9 together with the hydrogen atoms. The free electrons thus migrated onto the surface of the activated carbon powder 9 are extracted through the wiring 23 via the stainless steel plates 1,15 serving as the electrodes, and the thus extracted current can be utilized. The hydrogen atoms migrated onto the activated carbon powder 9 attract each other to assume a form of hydrogen molecule and fed back into the closed vessel 19, repeating the above-described cycle.

In the above-described cycle, if the number of free electrons on the catalyst layer 7 decreases to lower the efficiency of the battery, the hydrogen gas inlet 27 is let open to exhaust the hydrogen gas 21, the generator elements 17 can be reactivated by the mere exposure thereof to air. Because the platinum colloid 3 of the catalyst layer 7 adsorbs thereon free electrons in air and resumes its activity. Accordingly, the battery is maintenance free and can maintain stable power generation performance.

According to this embodiment, since the platinum colloid 3 is formed into a thin film of 200 to 300 Å the catalytic activity and power generation performance can effectively be improved. Besides, since a powdery activated carbon is used, a greater surface area can be secured, further improving the spillover phenomenon. In addition, the activated carbon powder 9 is in intimate contact with the catalyst layer 7, the span that the hydrogen atoms migrate is reduced, leading to minimized energy loss.

It should be appreciated that the present invention is not limited to the above embodiment. Namely, as the metal colloid constituting the catalyst layer, other platinum group colloids such as of nickel and rhodium can be used. Additionally, nickel colloid can be used in place of platinum group colloids.

Meanwhile, the metal plates can be substituted with other metal plates such as of copper, aluminum and iron, so long as they do not have catalytic activities (so long as they assume solid forms at normal temperature).

As has been described heretofore, clean energy can be supplied using the maintenance-free, compact and light spillover type battery according to this invention, which causes no public nuisances including atmospheric pollution and noises and which can be mass-produced at a low cost.

## Claims

1. A spillover type battery resorting to the spillover phenomenon, characterized in that the battery comprising:
    a generator element (11) consisting of a catalyst layer (7) formed by fixing a platinum group colloid (3) on a metal plate (1); a powdery activated carbon (9) applied on said catalyst layer; and another metal plate (15) clad on said activated carbon ;
    a closed vessel (19) in which said generator element (11) is placed;
    a hydrogen gas (21) contained in said closed vessel; and
    a wiring (23) for extracting a current connected to said metal plates.

2. The spillover type battery according to Claim 1, characterized in that said platinum group colloid (3) is of platinum.

3. The spillover type battery according to Claim 1, characterized in that said platinum group colloid (3) is of palladium.

4. The spillover type battery according to Claim 1, characterized in that nickel colloid is used in place of said platinum group colloid (3).

5. The spillover type battery according to any of Claims 1 to 4, characterized in that said catalyst layer is of a thin film.

6. The spillover type battery according to any of Claims 1 to 5, characterized in that said generator element (11) comprises a single layer.

7. The spillover type battery according to any of Claims 1 to 5, characterized in that said generator element (11) has a multi-layer structure.

8. The spillover type battery according to any of Claims 1 to 7, characterized in that said platinum group colloid is baked onto said metal plate.

9. The spillover type battery according to any of Claims 1 to 8, characterized in that said activated carbon is in intimate contact with said catalyst layer.

F I G. 1

F I G. 2

F I G. 3

# FIG. 4

15

9

13

# FIG. 5

23

25

15

19

21

17

1

27

# FIG.6

# FIG.7

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| A | WO-A-91 02385 (BELL COMMUNICATIONS RES) 21 February 1991 <br> * page 4, line 18 - page 5, line 9; claims 1-15 * | 1-9 | H01M8/18 <br> H01M14/00 <br> H01M10/34 |
| A | US-A-4 808 494 (PALMER DAVID N  ET AL) 28 February 1989 <br> * claims 1-36 * | 1-9 | |
| A | US-A-4 766 522 (MCHARDY JOHN  ET AL) 23 August 1988 <br> * claims 1-25 * | 1-9 | |
| A | US-A-4 677 038 (SALOMON ROBERT E) 30 June 1987 <br> * claims 1-24 * | 1-9 | |

TECHNICAL FIELDS
SEARCHED      (Int.Cl.6)

H01M

The present search report has been drawn up for all claims

| Place of search | Date of completion of the search | Examiner |
|---|---|---|
| THE HAGUE | 8 June 1995 | Battistig, M |

EPO FORM 1503 03.82 (P04C01)